Europäisches Patentamt

European Patent Office

Office européen des brevets

(11) Numéro de publication : **0 150 636**
**B1**

# (12) FASCICULE DE BREVET EUROPÉEN

(45) Date de publication du fascicule du brevet : 04.03.87

(21) Numéro de dépôt : **84402378.8**

(22) Date de dépôt : **21.11.84**

(51) Int. Cl.⁴ : **B 60 R 19/02**

---

(54) **Pare-chocs en matière plastique.**

---

(30) Priorité : **16.01.84 FR 8400603**

(43) Date de publication de la demande : **07.08.85 Bulletin 85/32**

(45) Mention de la délivrance du brevet : **04.03.87 Bulletin 87/10**

(84) Etats contractants désignés : **DE GB IT**

(56) Documents cités :
EP-A- 0 040 109
FR-A- 2 364 789
FR-A- 2 425 962
US-A- 4 022 505

(73) Titulaire : **AUTOMOBILES PEUGEOT**
**75, avenue de la Grande Armée**
**F-75116 Paris (FR)**

**AUTOMOBILES CITROEN**
**62 Boulevard Victor-Hugo**
**F-92200 Neuilly-sur-Seine (FR)**

(72) Inventeur : **Dossiñ, Jacques**
**4 Rue de l'Alma**
**F-92400 Courbevoie (FR)**

(74) Mandataire : **Moncheny, Michel et al**
**c/o Cabinet Lavoix 2 Place d'Estienne d'Orves**
**F-75441 Paris Cedex 09 (FR)**

Jouve, 18, rue St-Denis, 75001 Paris, France

## Description

La présente invention est relative aux pare-chocs réalisés par moulage d'une matière plastique et destinés à être fixés à la structure d'un véhicule.

Divers éléments, notamment de support ou de cloisonnement, sont généralement reliés au pare-chocs par vissage ou rivetage, entraînant des coûts de fabrication relativement importants à cause du nombre de pièces utilisées et du temps d'assemblage.

Pour remédier à cet inconvénient, il est connu d'intégrer au pare-chocs au moins l'un desdits éléments. Un tel pare-chocs qui correspond au préambule de la revendication 1 est connu par le document français FR-A-2 425 962. L'élément intégré doit alors avoir une forme autorisant son démoulage lors de la fabrication, ce qui implique généralement des surplus de matière augmentant le poids et le prix de l'ensemble pare-chocs et éléments ou bien, pour éviter ces surplus de matière, le moule doit être compliqué, composé de plusieurs parties ajustées coulissantes. De plus, au droit des jonctions entre le corps principal du pare-chocs et ledit élément intégré, la surface visible du pare-chocs risque de présenter des défauts d'aspect (« retassures »).

L'invention vise à réduire les inconvénients susmentionnés en réalisant par moulage d'une matière plastique un pare-chocs de bon aspect, peu coûteux et rapidement amovible.

Selon l'invention, l'élément venu de matière avec le corps du pare-chocs est relié à ce corps par une portion mince déformable et moulé dans une position différente de celle de son utilisation, le passage de l'une à l'autre de ces deux positions s'effectuant par pliage de ladite portion mince.

L'élément de support ou de cloisonnement est avantageusement équipé, vers une extrémité éloignée de la portion mince, de moyens d'attache rapide coopérant avec une autre partie du pare-chocs ou du véhicule, et en particulier avec la structure de ce dernier.

Deux exemples de réalisation de pare-chocs selon l'invention sont décrits ci-après, avec référence aux dessins annexés dont :

la Figure 1 est une vue en perspective d'un pare-chocs selon un premier mode de réalisation, avec son montage sur véhicule ;

la Figure 2 en est une vue en coupe par un plan vertical longitudinal au droit de la ligne II-II de la Fig. 1, en position d'utilisation sur véhicule,

et la Figure 3 est une vue en perspective d'un pare-chocs selon un second mode de réalisation.

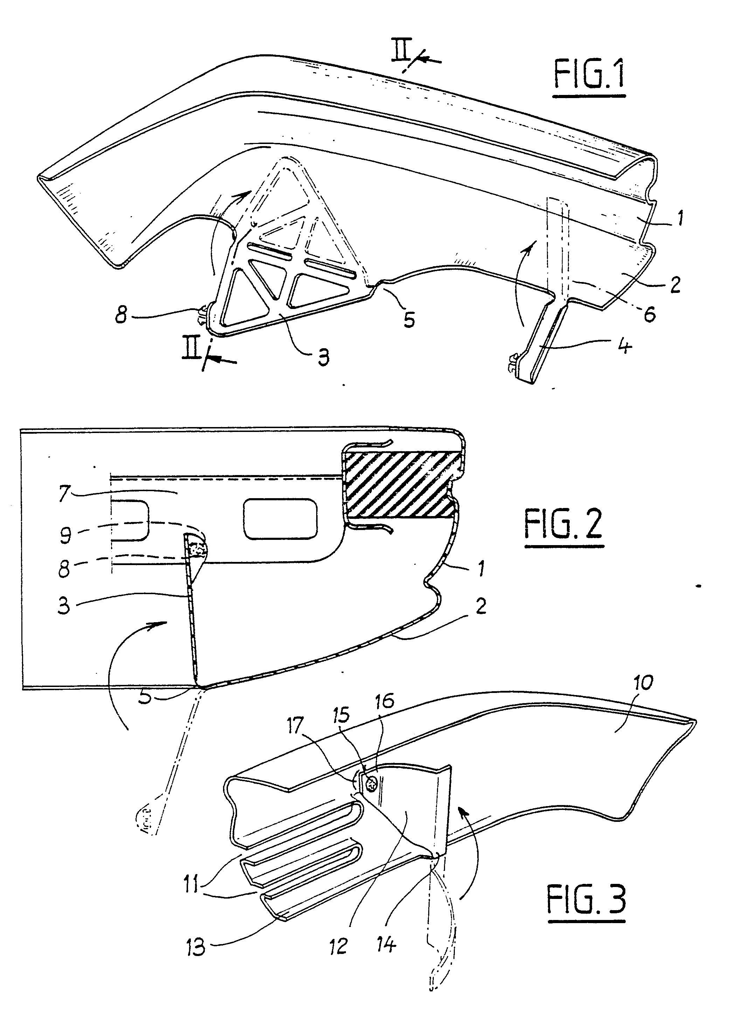

On voit sur les Fig. 1 et 2 un pare-chocs arrière de véhicule composé d'un corps principal 1 dont la partie inférieure est constituée d'une paroi 2 s'étendant vers l'avant du véhicule ou en d'autres termes vers la partie arrière adjacente du véhicule. Cette paroi est prolongée par deux éléments de support 3, 4 reliés chacun au bord de la paroi 2 par une portion mince 5, 6. Le pare-chocs est réalisé par moulage d'une matière plastique, de sorte que les portions minces 5, 6 peuvent être pliées autour d'un axe sensiblement transversal au véhicule, en permettant à chacun des éléments 3, 4 d'être rabattu depuis une position de fabrication où il est incliné vers le bas ou vers l'extérieur par rapport au volume délimité par le corps 1, comme visible en traits pleins à la Fig. 1 et en traits mixtes à la Fig. 2, jusqu'à une position d'utilisation représentée en traits mixtes à la Fig. 1 et en traits pleins à la Fig. 2. Dans cette dernière position, chaque élément, orienté à peu près verticalement vers le haut, est relié à la structure 7 du véhicule par un moyen d'attache rapide constitué par une agrafe 8 venue de matière avec l'élément et coopérant avec un trou 9 approprié agencé dans la structure.

La Fig. 3 représente un pare-chocs avant en matière plastique dont le corps principal 10 comporte, à proximité d'ouvertures 11 destinées à laisser pénétrer de l'air de refroidissement dans un compartiment moteur du véhicule, une cloison 12 à peu près verticale et légèrement inclinée par rapport à la direction longitudinale du véhicule.

Cette cloison est reliée au rebord inférieur 13 du pare-chocs par une portion mince 14 propre à être pliée autour d'un axe à peu près parallèle au bord inférieur du pare-chocs et donc sensiblement transversal. Comme dans l'exemple précédent, cet élément de cloisonnement ou de raidissement est orienté vers le bas (en traits mixtes) lors de sa fabrication par moulage en bloc avec le corps 10 du pare-chocs, tandis qu'il est rabattu vers le haut, par pliage de la portion mince 14, jusqu'à sa position d'utilisation. La cloison 12 est maintenue dans cette position par une vis 15, de préférence autotaraudeuse, appliquant son extrémité 16 opposée à la partie mince 14 contre un bossage 17 du corps 10. En variante, la vis est remplacée par un autre moyen d'assemblage connu, tel qu'un agrafage ou un rivetage à chaud.

Ces pare-chocs s'avèrent peu coûteux car le moule utilisé pour leur fabrication ne nécessite pas de tiroirs et l'assemblage avec la structure du véhicule est particulièrement rapide, ne nécessitant aucune pièce de fixation entre le corps 1 du pare-chocs et chaque élément de support 3, 4. De plus, les divers éléments de support 3, 4 et de cloisonnement 12 ne présentant pas de jonction venue de moulage avec la partie sensiblement verticale du corps 1, 10, la face visible de cette partie ne risque pas de comporter des retassures nuisibles à son aspect.

## Revendications

1. Pare-chocs moulé en matière plastique, destiné à être fixé sur une structure (7) de véhicule automobile et comportant un corps (1 ; 10) et au moins un élément (3, 4 ; 12) de support, de cloisonnement ou de raidissement, venus de moulage, caractérisé en ce que l'élément (3, 4 ;

12) venu de matière avec le corps (1 ; 10) du pare-chocs est relié à ce corps (1 ; 10) par une portion mince déformable (5, 6 ; 14) et moulé dans une position différente de celle de son utilisation, le passage de l'une à l'autre de ces deux positions s'effectuant par pliage de ladite portion mince (5, 6 ; 14).

2. Pare-chocs selon la revendication 1, caractérisé en ce que ladite portion mince (5 ; 14) s'étend le long de l'un des bords libres du pare-chocs.

3. Pare-chocs suivant la revendication 2, caractérisé en ce que ladite portion mince (5 ; 14) s'étend le long du bord inférieur du pare-chocs.

4. Pare-chocs selon la revendication 1, caractérisé en ce que l'élément (3, 4 ; 12) est muni à son extrémité éloignée de la portion mince (5, 6 ; 14) de moyens d'attache rapide (8) destinés à coopérer avec une autre partie du véhicule.

5. Pare-chocs suivant la revendication 1, caractérisé en ce que, en position de moulage, l'élément (3, 4 ; 12) s'étend vers l'extérieur par rapport au volume délimité par le corps (1 ; 10) du pare-chocs.

## Claims

1. Bumper moulded from a plastics material, intended to be fixed to an automobile vehicle structure (7) and comprising a body (1 ; 10) and at least a support, partitioning or stiffening element moulded in one piece with the body, characterized in that the element (3, 4 ; 12) moulded in one piece with the body (1 ; 10) of the bumper is connected to the body (1 ; 10) by a deformable thin portion (5, 6 ; 14) moulded in a position different from that of its utilization, the passage from one to the other of these two positions being effected by folding said thin portion (5, 6 ; 14).

2. Bumber according to claim 1, characterized in that said thin portion (5 ; 14) extends along one of the free edges of the bumper.

3. Bumper according to claim 2, characterized in that said thin portion (5 ; 14) extends along the lower edge of the bumper.

4. Bumper according to claim 1, characterized in that the element (3, 4 ; 12) is provided at its end remote from the thin portion (5, 6 ; 14) with rapid fastening means (8) intended to cooperate with another part of the vehicle.

5. Bumper according to claim 1, characterized in that, in the moulding position, the element (3, 4 ; 12) extends outwardly relative to the volume defined by the body (1 ; 10) of the bumper.

## Patentansprüche

1. Aus Kunststoffmaterial geformte Stoßstange zur Befestigung an einem Kraftfahrzeugaufbau (7) mit einem Körper (1 ; 10) und mindestens einem Halte-, Unterteilungs- oder Versteifungselement (3, 4 ; 12) welche angeformt sind, dadurch gekennzeichnet, daß das aus einem Material mit dem Körper (1 ; 10) der Stoßstange geformte Element (3, 4 ; 12) mit diesem Körper (1 ; 10) über einen dünnen verformbaren Abschnitt (5, 6 ; 14) verbunden ist, welcher in einer Position geformt ist, die sich von derjenigen seiner Anwendung unterscheidet, wobei der Übergang von der einen zu anderen der beiden Positionen durch Biegung des dünnen Abschnittes (5, 6 ; 14) erfolgt.

2. Stoßstange nach Anspruch 1, dadurch gekennzeichnet, daß der dünne Abschnitt (5 ; 14) sich längs eines der freien Ränder der Stoßstange erstreckt.

3. Stoßstange nach Anspruch 2, dadurch gekennzeichnet, daß der dünne Abschnitt (5 ; 14) sich längs des unteren Randes der Stoßstange erstreckt.

4. Stoßstange nach Anspruch 1, dadurch gekennzeichnet, daß das Element (3, 4 ; 12) an seinem von dünnem Abschnitt (5, 6 ; 14) entfernten Ende mit Schnellbefestigungseinrichtungen (8) versehen ist, welche dazu bestimmt sind, mit einem anderen Teil des Fahrzeugs zusammenzuwirken.

5. Stoßstange nach Anspruch 1, dadurch gekennzeichnet, daß sich das Element (3, 4 ; 12) in Formungsposition nach außen im Verhältnis zu dem vom Körper (1 ; 10) der Stoßstange begrenzten Volumen erstreckt.

0 150 636

FIG.1

FIG.2

FIG.3

1